# EUROPEAN PATENT SPECIFICATION

(11) **EP 0 983 451 B1**
(45) Date of publication and mention of the grant of the patent: **26.01.2005**
(21) Application number: 97943060.0
(22) Date of filing: 26.09.1997
(51) Int. Cl.: F16D 65/12

(54) **BRAKE DISC ASSEMBLY**
BREMSSCHEIBEANORDNUNG
ENSEMBLE DISQUE DE FREIN

(30) Priority: 28.09.1996 GB 9620285
(43) Date of publication of application: 08.03.2000
(73) Proprietor: Mercer, Paul Francis, Richmond, North Yorkshire DL10 4TQ (GB)
(72) Inventor: MERCER, Paul Francis, 2 Mercury road, Richmond /North Yorkshire DL 104TQ (GB); SYKES, Graham, 2 Mercury Road, Richmond /North Yorkshire DL10 4TQ (GB)
(74) Representative: Allen, Philippa Margaret
(86) International application number: PCT/GB1997/002654
(87) International publication number: WO 1998/013622

(56) References cited:
- EP-A- 0 235 382
- WO-A-93/14947
- DE-A- 1 530 576
- DE-A- 2 721 143
- DE-A- 3 216 108
- DE-A- 3 630 334
- DE-A- 4 420 758
- GB-A- 1 202 904
- US-A- 3 542 166

## Description

The present invention relates to a brake disc assembly, to a method for the manufacture, process for the assembly and to the use of the assembly or a component thereof, in particular to a brake disc assembly providing for moving adjustment of component parts, in particular in response to thermal stresses, to the process for the assembly in the form of component parts and to the use thereof, more particularly to a high performance ventilated brake disc assembly.

Disc brakes are conventionally employed in most forms of wheel-driven engines or vehicle, in particular motor vehicles, trains, elevators, motor bikes and the like. Design modifications are extensive, however characteristically all comprise one or more friction pads mounted in non-rotating manner and adapted to contact an annular friction disc or ring having one or more friction surfaces supported or comprised on a mounting hub or carrier adapted to be rigidly connected with the (drive) wheel of a vehicle, for example the wheel-hub, in suitable manner. Closing the friction pad(s) by calliper action onto the rotating friction surface(s) causes braking.

Disc brakes and their mountings must be designed to meet a number of requirements, in particular a good heat resistance to friction braking and compatibility of components to allow for differences in thermal expansion without distortion or deviation of the friction surfaces which would result in inferior contact with the carrier and accordingly inadequate braking, oil and solvent resistance, high mechanical integrity, economically efficient manufacture of a disposable item, i.e. the friction surface itself, and design of suitable attachment means for the disposable item. Attempts to address these requirements have resulted in the design of "floating" friction discs, as a departure from previously riveted discs, whereby the disc-mounting attachment allows for moving adjustment or "float" of component parts to accommodate differences in thermal expansion, however these designs have invariably utilised fixing or retention means which can disengage if correctly assembled, employed beyond a normal lifetime or subject to the shock of vehicle impact. Alternatively or additionally, designs have employed ventilation means, typically provided as air passages in radially outward direction along the disc and/or mounting face(s), whereby rapid air flow is created on rotation of the assembly, resembling a rotor-type effect. Nevertheless this is sufficient to overcome extreme heat accumulation incurred with high performance and/or heavily laden vehicles. More recently designs have employed carbon fibre components. However such discs are prohibitively expensive and their use in typically limited to high performance and racing applications. Moreover the frictional braking force is low at low temperatures and only becomes reliable and effective at higher disc temperatures.

DE-A-3216108 describes a brake disc assembly comprising an annular disc constituting the brake service and a hub constituting the carrier mounting. The brake service has planar projections on its inner annular rim and the carrier has axial projections on its circumferential rim. To assemble the carrier and the brake service, said planar projections engage recesses between the axial projections. The hub-like carrier with its axially extending projections requires a lot of axial space.

Accordingly there is a need for disc brake which is adapted to meet the hereinbefore mentioned requirements and may be manufactured simply and efficiently for economical use in high cost and low cost applications.

We have now surprisingly found that a simple and effective means may be employed for the attachment with secure retention of a brake disc and carrier mounting, which means is adapted for moving adjustment of component parts, which may be manufactured and assembled to a high degree of safety and reliability, and is characterised by outstanding performance whilst being essentially of simple construction.

In its broadest aspect there is provided according to the present invention a brake disc assembly comprising an annular disc and a carrier mounting therefor, adapted to associate at respective inner annular rim and outer circumferential rim, and annular attachment means therefor, wherein each of the disc and carrier is adapted to expand by means of incremental increase of the respective diameters thereof and wherein the attachment and association means are adapted to provide for moving adjustment of component parts to accommodate expansion thereof.

The annular disc and carrier mounting may expand or contract in response to thermal increase or decrease thereof. A thermal expansion of a closed ring or disc will typically follow the lowest constraint, whereby in the absence of circumferentially constraining forces, the natural expansion is by incremental diameter increase or decrease as hereinbefore defined.

Preferably the attachment means comprises a high strength material which may be of high or low, preferably low thermal expansion. Preferably the attachment means comprises an open annular ring, i.e. having a passage between the inner and outer annular rim thereof such as a radially or otherwise aligned break, whereby it is adapted to deform by radially outward or inward directed force, which is of advantage in the location and assembly thereof.

Conventional discs and carriers comprise regularly spaced planar apertures or recesses which are adapted for coincidence on placing the disc and carrier in coaxial alignment for assembly.

Preferably a disc and carrier as hereinbefore defined resemble such discs and carrier known in the art, whereby a disc is an annular ring having planar projections on the inner annular rim thereof adapted to engage opposing planar recesses on the outer circumferential rim of the carrier, thereby creating in combination a continuous profile at the carrier outer rim. Suitably a disc and carrier will each comprise three or more projections and recesses, thereby creating three or more association points, preferably the number thereof is adapted to the size and mechanical requirement of the disc, more preferably is in the range 6-30, most preferably 8-15 recesses.

In a preferred embodiment of the invention, planar projections and recesses as hereinbefore defined are substantially radially projecting and receding, and are adapted for radially unconstrained association, for example on subjecting the disc-carrier assembly to rotation about a common access. Preferably means are provided for the closure of each recess at each planar face thereof, adapted to abut each planar face of a mating projection received therein. Preferably attachment means comprises a single annular ring adapted to seat against each recess at one planar face thereof, whereby it provides a removable closure allowing for manual assembly and dessembly, and each recess comprises a substantially permanent, integral or otherwise, closure at the opposite planar face thereof.

The attachment means may be adapted to seat against the recess faces as hereinbefore defined by any suitable means allowing for moving adjustment thereof. Preferably the carrier mounting comprises at one face thereof a return flange projection extending in axial and in radial direction to a face thereof, adapted to receive and partially surround the annular attachment means. More preferably the return flange extends in axial direction at the circumferential rim of the carrier mounting and in radially inward direction, providing an annular aperture, adapted for radially outward and axial-directed constrained seating of the annular attachment ring. The flange projection is suitably comprised of a plurality of return flanges, arranged between mating recesses, thereby allowing for receipt of mating projections of an annular disc, as hereinbefore defined, between each flange projection.

Preferably the opposite face of the carrier mounting, remote from the return flanges, is substantially continuous or solid, i.e. the mating recesses at its circumference are provided at one face thereof corresponding to the face adapted to seat the attachment means, and do not extend through to the opposite face which thereby provides the permanent closure adapted to abut mating projections received in each recess.

It will be appreciated that in a particular advantage of the invention, the assembly exploits the configuration and the natural expansion of the component parts to assist in floating retention thereof. In the preferred embodiment, mating projections and recesses secure the disc and carrier against relative disengagement in circumferential or tangential direction and, together with coincidence of annular and circumferential rims of disc and carrier, secure the disc from radial inward (centripetal) and outward (centrifugal) disengagement. In addition the closure at inner and outer faces of mating recesses and mating projections adapted to be received therein, secure against axially directed disengagement.

The carrier of the assembly of the invention suitably comprises any nature of return flange projection(s) such that the carrier face and return flange(s) are adapted for the secure retention of attachment means therebetween, suitably the flange projection is of any suitable geometry adapted to engage the hereinbefore defined attachment means, preferably is of dog-leg or concave configuration.

In a particular advantage of the preferred embodiment of the invention, the means of attaching the annular disc and carrier mounting enables provision of an annular disc having flat disc faces, i.e. not requiring laterally projecting bolts, buttons and the like, which allows excellent brake pressure dissipation into the carrier and uniform, hence reduced, wear.

Preferably the face of the carrier adapted for inward orientation towards the wheel on which it is to be mounted is substantially flat, and may diverge outwardly therefrom, such as at the circumferential carrier rim to provide for inward projection of the return flanges.

It will be appreciated that mechanical equivalents of the hereinbefore defined assembly may be employed in manner known in the art, for example a resiliently deformable annular ring is representative of any suitable annular spring and is functionally equivalent to any annular ring having alternative and additional means for attachment in similar manner.

In a further aspect of the invention there is provided a ventilated brake disc assembly comprising the assembly as hereinbefore defined wherein one or both of the disc and mounting comprise ventilation means adapted for cooling heat exchange contact with atmospheric air. Preferably ventilation means comprises a plurality of substantially radially directed vanes at the outside face of the carrier, and/or a plurality of vents machined laterally at regular intervals through the disc, creating thereby a vented rotor. More preferably the vents in a vented disc or rotor correspond to the fan vanes machined in the carrier, allowing maximum air flow from the fan vanes through the rotor vents. It will be appreciated that the air flow is proportional to the angular speed of the assembly, and accordingly the cooling effect achieved.

It will be appreciated that any manner of known ventilation may be employed, for example the carrier disc may comprise a plurality of machined holes from one face to the other, serving for ventilation and simultaneous lightening of the device.

The ventilated assembly as hereinbefore defined may comprise a backing plate located in association with the outer face of the carrier, whereby carrier vanes are enclosed between the carrier and the backing plate. Suitably the backing plate comprises air inlet means enabling controlled intake, passage and cooling of the assembly. The backing plate is suitably mounted fixedly with relation to the wheel and is not adapted for rotation with the assembly of the invention. Preferably a backing plate comprises an air inlet adapted to be positioned in a high pressure area with relation to the wheel mounting, for example on a motor bike it will be located below the fork leg, maximising air intake. A suitable intake may comprise a scoop design creating a circumferentially directed inlet passage of which the inlet opening direction is coincident with intended direction of motion of a vehicle. The scoop inlet or aperture may be fitted with a small air filter to prevent stones and the like being drawn in and causing damage to the assembly. The backing plate preferably is distanced by a small gap from the disc, preventing wearing or heat distortion, thereby maximising the passage of air through the disc rotor vents, rather than about the outside thereof.

The backing plate air inlet is suitably adapted to be positioned such that maximum air flow passes through the region of maximum heat accumulation of the disc, for example just after the calliper. The aperture size is suitably such as to prevent disturbance of steering control, preferably is smaller than the total vented area in the disc.

It will be appreciated that the advantages of the assembly as hereinbefore defined are numerous, and include additionally the provision of a light assembly providing a superior ratio of heat dissipation surface area to total dimensions, may comprise only three components thereby providing a simple assembly with minimum maintenance and failure, and provides flat face disc and small separation of carrier to calliper, providing excellent braking efficiency and minimum spillage of cooling air in the ventilated design.

Accordingly in a further aspect of the invention there is provided the use of an assembly as hereinbefore defined in the braking system of a vehicle, preferably of a high performance automotive or motorcycle, particularly for competition and racing.
The device is advantageously adapted to be manually assembled by virtue of the self-engaging nature thereof.

In a further aspect of the invention there is provided a process for the assembly of an assembly as hereinbefore defined comprising locating a disc as hereinbefore defined in association with a carrier as hereinbefore defined by bringing these laterally into mating association as hereinbefore defined, and introducing attachment means as hereinbefore defined thereby securing the disc in moving retention with the carrier. In a preferred aspect, the method for assembly comprises bringing mating projections and recesses as hereinbefore defined into association, whereby the projections abut against the carrier at its opposite face, and deforming an open annular ring, i.e. having a break as hereinbefore defined, by radial inward compression to pass this underneath the return flanges as hereinbefore defined and release compression allowing resilient expansion thereof to seat against the front face of the recesses as hereinbefore defined.

In a further aspect of the invention there is provided a kit of parts comprising one or more of a disc and carrier and optional backing plate as hereinbefore defined and a resiliently deformable attachment means as hereinbefore defined. Preferably a kit of parts comprises a plurality of each component part adapted for the assembly of one or more disc-brakes as hereinbefore defined.

Components of the assembly of the invention may be made of any suitable material adapted for the purpose, for example having a thermal resistance up to a temperature of the region of 700 C, being readily extrudable, mouldable or machineable, having a high oil and solvent resistance and preferably having a low co-efficient of thermal expansion or alternatively comprising components having the same or similar uniform co-efficient of thermal expansion throughout. Suitable materials include metals, alloys and polymers, preferably high performance alloys and metals. Preferably each component part of the assembly is constructed as a single integral component whereby failure of welds and joints is not envisaged.

In a further aspect of the invention there is provided a process for the manufacture of a device as hereinbefore defined comprising obtaining a material as hereinbefore defined and forming into components, comprising a disc and carrier and optional backing plate as hereinbefore defined and a component comprising resiliently deformable attachment means as hereinbefore defined having compatible dimensions and configuration as hereinbefore defined.

The disc and carrier as hereinbefore defined are suitably machined from solid, allowing the components to be void of casting stresses. Suitably the disc is machined from solid iron bars such as graphite iron bars preferably spheroidical (SG) or the like, providing the necessary mechanical integrity.
Suitably the carrier is machined from aluminium alloy such as HE 30.

The attachment means comprising an annular ring as hereinbefore defined is suitably constructed from material strong enough to retain the disc in association with the carrier as hereinbefore defined, and capable of withstanding the operating temperatures generated in use. Preferably the annular ring comprises a laminar structure of a material selected from synthetic polymers, fibres, alloys, metals and the like, preferably selected from stainless steel and mixtures thereof with other components. The laminar ring is therefore advantageously light, strong and simple to produce, and provides the desired degree of resilient deformability.

A backing plate as hereinbefore defined is suitably comprised of a carbon fibre moulding for lightness and appearance, however maybe constructed of equivalent suitable materials as desired, such as aluminium or the like.

Further aspects of the invention will be apparent from the foregoing.

The invention is now illustrated in non limiting manner with reference to Figures 1-6 wherein.
Figure 1 is a cross section view from the inside face of an assembly of the invention.
Figures 2-6 are front elevations and corresponding end elevations of the component parts of an assembly of the invention.

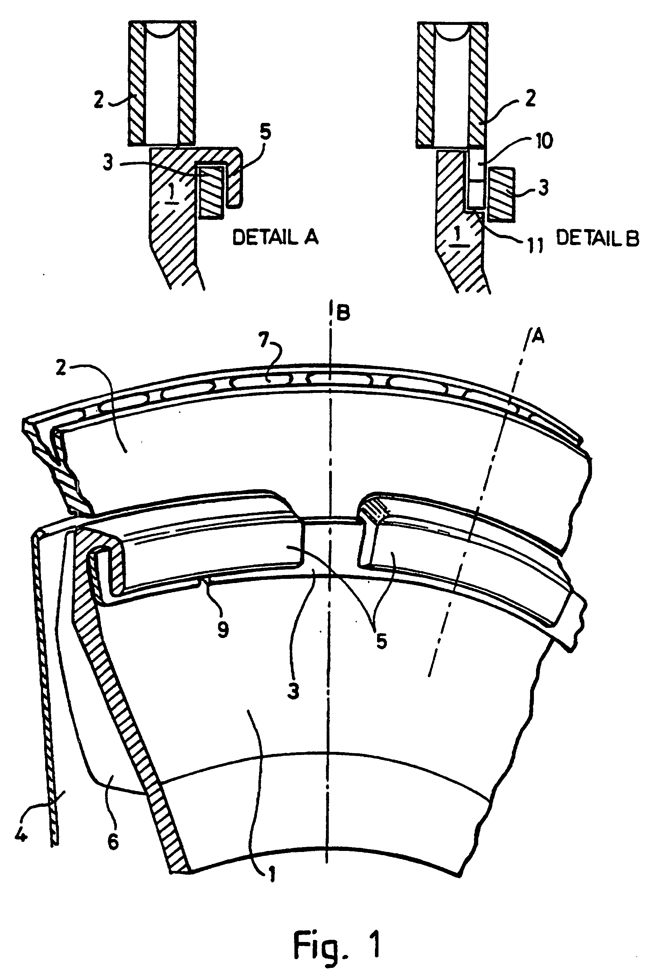

Figure 1 illustrates carrier (1), disc (2), annular ring (3) and optional backing plate (4). The carrier (I) is suitably constructed of aluminium and recedes towards the rim thereof, and includes return flanges (5) along its circumferential rim. Carrier vanes (6) are indicated projecting outwardly from the outward face thereof. Disc (2) comprises vents (7). Annular ring (3) includes expanding break (9).

Detail A and B show a cross sectional view through the carrier (part) (1), disc (2) and ring (3) at lines A and B respectively. In detail B mating projection (10) and recess (11) are indicated.

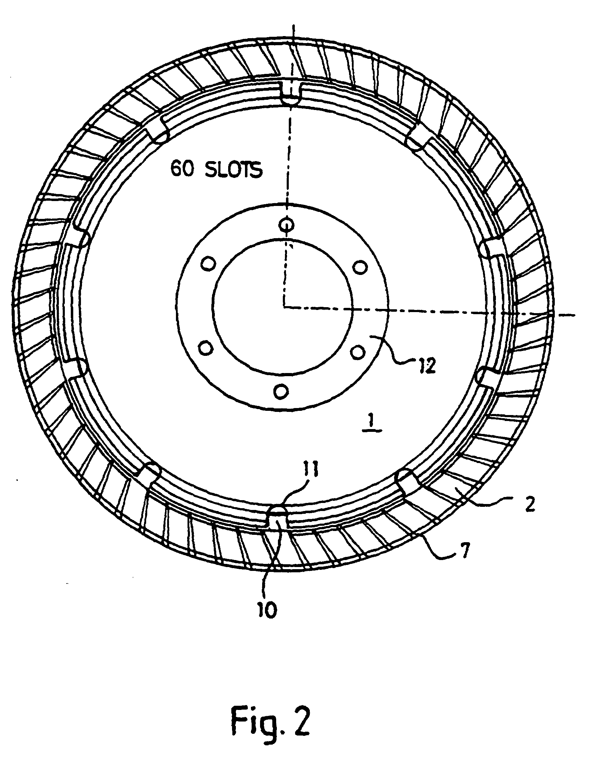

In Figure 2 is shown carrier (1) and disc (2), with associated mating projections and recesses (10), (11). In this case sixty vents (7) are indicated. Mounting means (12) is shown, as standards.

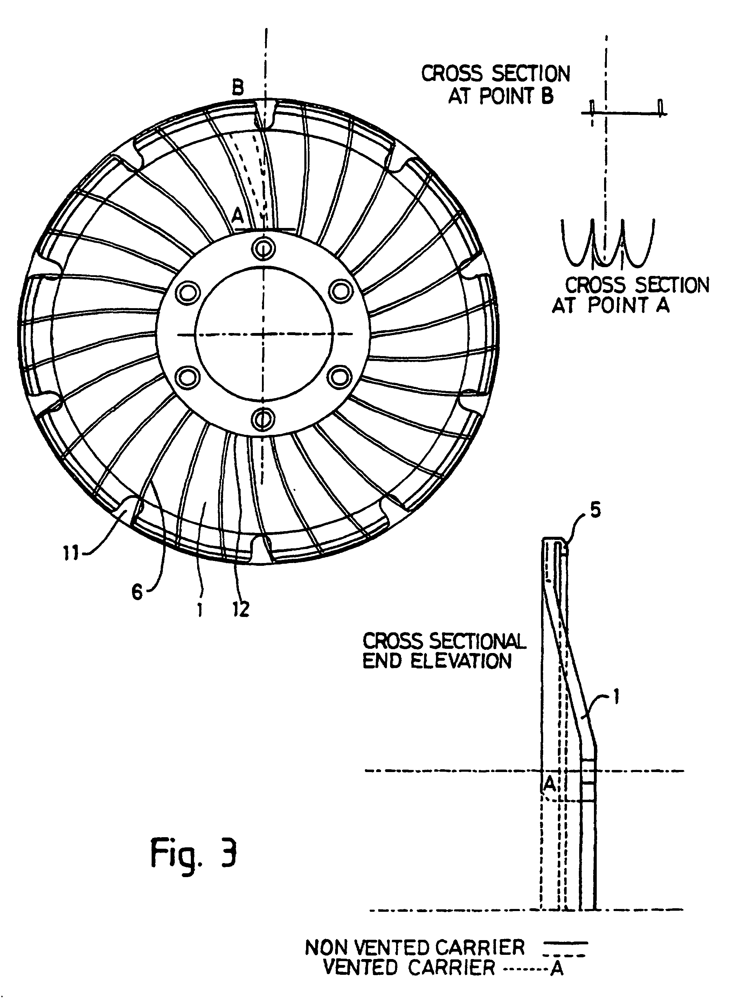

In Figure 3 carrier (1) is shown, indicating vanes (6) and recesses (11) on the inside face thereof, not projecting through to the outside face. In end elevation the divergent configuration of the carrier is apparent, for both vented and non vented options.

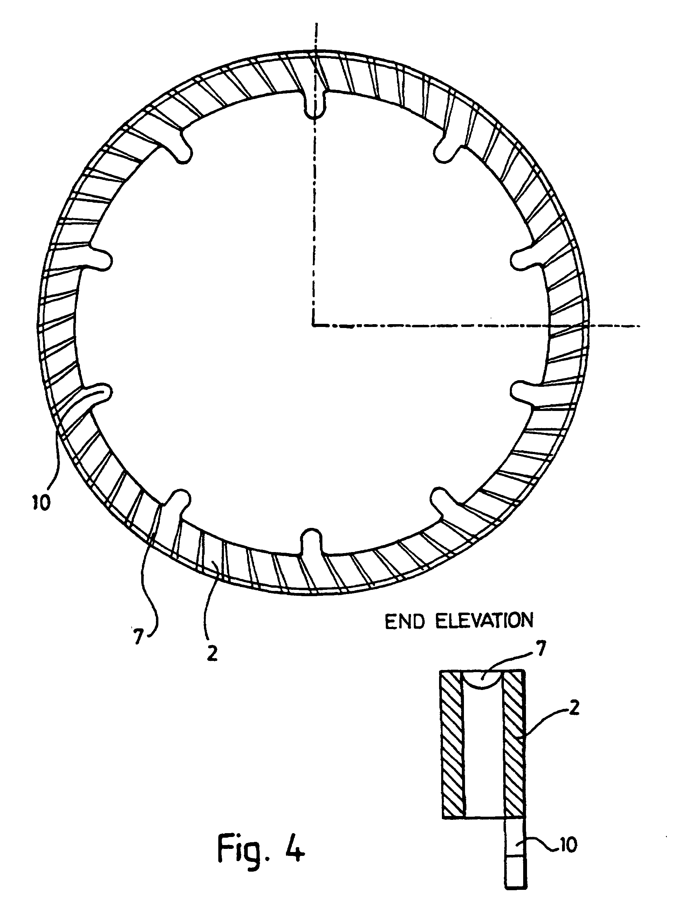

In Figure 4 disc (2) is shown including vents (7) and mating projections (10). In cross section the vents and mating projection are apparent.

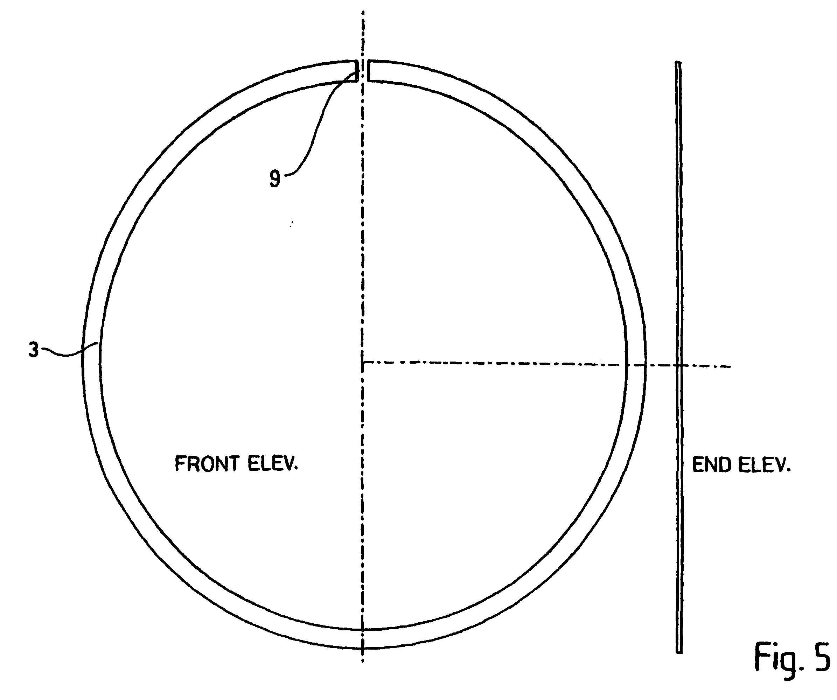

In Figure 5 the annular ring is shown (3) with expanding break (9).

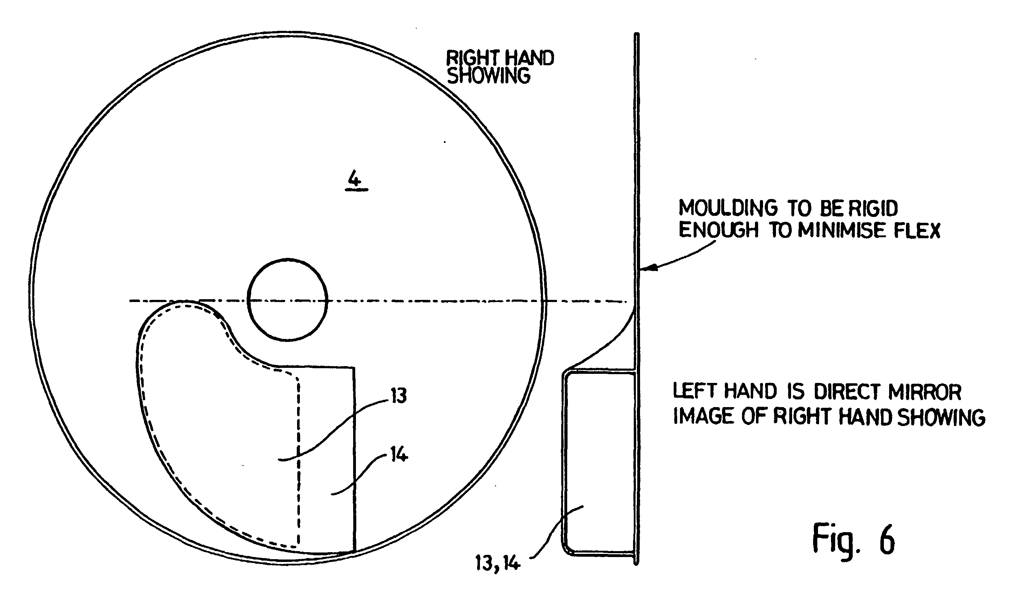

In Figure 6 the backing plate (4) is shown with air inlet aperture (13) and scoop (14).

## Claims

1. Brake disc assembly comprising an annular disc (2) and a carrier mounting (1) therefor, adapted to associate at respective inner annular rim and outer circumferential rim, and annular attachment means (3) therefor, wherein each of the disc (2) and carrier (1) is adapted to expand by means of incremental increase of the respective diameters thereof and wherein the attachment and association means are adapted to provide for moving adjustment of component parts to accommodate expansion thereof, wherein the annular disc is an annular ring having planar projections (10) on the inner annular rim thereof adapted to engage opposing planar recesses (11) on the outer circumferential rim of the carrier, and wherein the carrier mounting (1) comprises at one face thereof a return flange projection (5) adapted to receive and partially surround the annular attachment means (3) and wherein the return flange (5) extends in axial direction at the circumferential rim of the carrier mounting and in radially inward direction, providing an annular aperture, adapted for radially outward and axial-directed constrained seating of the annular attachment ring (3).

2. Brake disc assembly according to Claim 1 wherein the annular attachment means comprises an open annular ring (3) having a passage between the inner and outer annular rim thereof (9), whereby it is adapted to deform by radially outward or inward directed force.

3. Brake disc assembly according to any of Claims 1 and 2 wherein planar projections (10) and recesses (11) are substantially radially projecting and receding and are adapted for radially unconstrained association.

4. Brake disc assembly according to any of Claims 1 to 3 wherein means are provided for the closure of each recess at each planar face thereof.

5. Brake disc assembly according to any of Claims 1 to 4 wherein attachment means comprises a single annular ring (3) adapted to seat against recesses (11) at one planar face thereof.

6. Brake disc assembly according to any of Claims 1 to 5 wherein the flange projection is comprised of a plurality of return flanges (5), arranged between mating recesses (11), thereby allowing for receipt of mating projections (10) of an annular disc (2) between each flange projection.

7. Brake disc assembly according to any of Claims 1 to 6 wherein the face of the carrier mounting remote from the return flanges is substantially continuous or solid.

8. Brake disc assembly according to any of Claims 1 to 7 which is a ventilated brake disc assembly wherein one or both of the disc and mounting comprise ventilation means (6, 7) adapted for cooling heat exchange contact with atmospheric air.

9. Brake disc assembly according to Claim 8 wherein ventilation means comprises a plurality of substantially radially directed vanes (6) at the outside face of the carrier, and/or a plurality of vents (7) machined laterally at regular intervals through the disc, creating thereby a vented rotor.

10. Brake disc assembly according to any of Claims 8 and 9 which comprises a backing plate (4) located in association with the outer face of the carrier, whereby carrier vanes are enclosed between the carrier and the backing plate.

11. Brake disc assembly according to any of Claims 1 to 10 for use in the braking system of a vehicle, particularly for high performance automotive or motorcycle competition and racing.

12. Process for the assembly of an assembly as hereinbefore defined in any of Claims 1 to 10 comprising locating a disc (2) as hereinbefore defined in association with a carrier (3) as hereinbefore defined by bringing these laterally into mating association and introducing attachment means thereby securing the disc in moving retention with the carrier and closing the recesses at a planar face thereof; the attachment means abutting a planar face of each mating projection.

13. Process according to Claim 12 which comprises bringing mating projections and recesses into association, whereby the projections abut against the carrier at its opposite face, and deforming an open annular ring having a break as hereinbefore defined, by radial inward compression to pass this underneath the return flanges as hereinbefore defined and release compression allowing resilient expansion thereof to seat against the front face of the recesses.

14. Brake disc assembly according to any one of Claims 1 to 10 which is a kit of parts comprising one or more of a disc and carrier and optional backing plate, and a resiliently deformable attachment means as hereinbefore defined.

## Patentansprüche

1. Bremsscheibenbaugruppe aufweisend eine kranzförmige Scheibe (2) und eine Trägerhalterung (1) hierfür, die so ausgebildet sind, um an einem jeweiligen inneren kranzförmigen Rand und einem äußeren umfänglichen Rand verbunden zu werden, und kranzförmige Befestigungsmittel (3) hierfür, wobei sowohl die Scheibe (2) als auch der Träger (1) so ausgebildet sind, dass sie / er mittels eines inkrementellen Anwachsens des jeweiligen entsprechenden Durchmessers expandieren und wobei die Befestigungs- und Verbindungsmittel so ausgebildet sind, um eine bewegliche Justage von Bauelementteilen zur Verfügung zu stellen, um einer Expansion hiervon Rechnung zu tragen, wobei die kranzförmige Scheibe ein kranzförmiger Ring ist, der planare Vorsprünge (10) auf dem inneren kranzförmigen Rand hiervon besitzt, die so ausgebildet sind, um gegenüberliegende planare Ausnehmungen (11) auf dem äußeren umfänglichen Rand des Trägers in Eingriff zu bringen, und wobei die Trägerhalterung (1) auf einer Fläche hiervon einen Rückholflanschvorsprung (5) aufweist, der so ausgebildet ist, um das kranzförmige Befestigungsmittel (3) aufzunehmen und teilweise zu umgeben, und wobei der Rückholflansch (5) sich in axialer Richtung an dem umfänglichen Rand der Trägerhalterung und in radialer nach innen gerichteter Richtung erstreckt, wodurch eine kranzförmige Öffnung zur Verfügung gestellt wird, die für eine radial nach außen gerichtete und axial gerichtete Zwangslagerung des kranzförmigen Befestigungsrings (3) ausgebildet ist.

2. Bremsscheibenbaugruppe gemäß Anspruch 1, wobei das kranzförmige Befestigungsmittel einen offenen kranzförmigen Ring (3) aufweist, der einen Durchlass zwischen dem inneren und äußeren kranzförmigen Rand hiervon (9) besitzt, wobei er so ausgeführt ist, dass er sich durch eine radial nach außen gerichtete oder nach innen gerichtete Kraft deformiert.

3. Bremsscheibenbaugruppe gemäß einem der Ansprüche 1 und 2, wobei planare Vorsprünge (10) and Ausnehmungen (11) im wesentlich radial vorstehen und zurückweichen und für eine radial zwangsfreie Verbindung ausgeführt sind.

4. Bremsscheibenbaugruppe gemäß einem der Ansprüche 1 bis 3, wobei Mittel für das Schließen jeder Ausnehmung an jeder planaren Fläche hiervon zur Verfügung gestellt sind.

5. Bremsscheibenbaugruppe gemäß einem der Ansprüche 1 bis 4, wobei Befestigungsmittel einen einzelnen, kranzförmigen Ring (3) aufweisen, der so ausgeführt ist, dass er gegen Ausnehmungen (11) an einer planaren Fläche hiervon gelagert ist.

6. Bremsscheibenbaugruppe gemäß einem der Ansprüche 1 bis 5, wobei der Flanschvorsprung aus einer Vielzahl von Rückholflanschen (5) besteht, die zwischen passenden Ausnehmungen (11) angeordnet sind, wodurch die Aufnahme von passenden Vorsprüngen (10) einer kranzförmigen Scheibe (2) zwischen allen Flanschvorsprüngen ermöglicht wird.

7. Bremsscheibenbaugruppe gemäß einem der Ansprüche 1 bis 6, wobei die Fläche der Trägerhalterung, die entfernt von den Rückholflanschen ist, im wesentlichen kontinuierlich oder fest ist.

8. Bremsscheibenbaugruppe gemäß einem der Ansprüche 1 bis 7, welche eine belüftete Bremsscheibenbaugruppe ist, wobei eine oder beide von Scheibe und Halterung Belüftungsmittel (6, 7) aufweisen, die für kühlenden Wärmeaustauschkontakt mit atmosphärischer Luft ausgebildet sind.

9. Bremsscheibenbaugruppe gemäß Anspruch 8, wobei ein Belüftungsmittel eine Vielzahl von im wesentlichen radial gerichteten Flügeln (6) an der äußeren Fläche des Trägers, und / oder eine Vielzahl von Entlüftungsöffnungen (7), die lateral in regelmäßigen Abständen durch die Scheibe eingearbeitet sind und hierdurch einen belüfteten Rotor erzeugen, aufweist.

10. Bremsscheibenbaugruppe gemäß einem der Ansprüche 8 und 9, die eine Stützplatte (4) aufweist, die in Verbindung mit der äußeren Fläche des Trägers angeordnet ist, wobei Trägerflügel zwischen dem Träger und der Stützplatte eingeschlossen sind.

11. Bremsscheibenbaugruppe gemäß einem der Ansprüche 1 bis 10 zur Verwendung im Bremssystem eines Fahrzeugs, insbesondere für Hochleistungsautomobile oder Motorradwettkämpfe und Rennsport.

12. Verfahren für die Herstellung einer Baugruppe wie hier zuvor in einem der Ansprüche 1 bis 10 definiert, aufweisend Anordnen einer Scheibe (2) wie hier zuvor definiert in Verbindung mit einem Träger (3) wie hier zuvor definiert, indem diese lateral in passende Verbindung gebracht werden und ein Befestigungsmittel eingeführt wird, wodurch die Scheibe in beweglicher Halterung mit dem Träger gesichert wird und die Ausnehmungen an einer planaren Fläche hiervon geschlossen werden; wobei das Befestigungsmittel an einer planaren Fläche jedes passenden Vorsprungs aufliegt.

13. Verfahren gemäß Anspruch 12, welches aufweist in Verbindung bringen von passenden Vorsprüngen und Ausnehmungen, wobei die Vorsprünge gegen den Träger an seiner gegenüberliegenden Fläche anliegen, und Deformieren eines offenen kranzförmigen Rings, der eine Unterbrechung wie hier zuvor definiert aufweist, durch eine radial nach innen gerichtete Kompression, um diese unterhalb des Rückholflanschs wie hier zuvor definiert hindurch zu führen und die Kompression zurückzunehmen um eine elastische Expansion hiervon zu ermöglichen, um gegen die frontale Fläche der Ausnehmungen zu lagern.

14. Bremsscheibenbaugruppe gemäß einem der Ansprüche 1 bis 10, die ein Bausatz von Bauteilen ist, welcher eines oder mehrere aus einer Scheibe und einem Träger und optional einer Stützplatte und einem elastisch deformierbaren Befestigungsmittel wie hier zuvor definiert aufweist.

## Revendications

1. Ensemble de frein à disque comprenant un disque annulaire (2) et un montage support (1) pour celui-ci, adapté pour s'associer à une couronne intérieure annulaire respective et à une couronne circonférentielle extérieure, et un moyen de fixation annulaire (3) pour cela, dans lequel chaque disque (2) et chaque support (1) est adapté pour se dilater grâce à une augmentation incrémentale des diamètres respectifs de ceux-ci et dans lequel les moyens de fixation et d'association sont adaptés pour assurer un ajustement mobile des parties constitutives pour s'adapter à leur dilatation, dans lequel le disque annulaire est une bague annulaire ayant des projections planes (10) sur la couronne annulaire intérieure de celui-ci adaptées pour s'engager dans des creux plans opposés (11) sur la couronne circonférentielle extérieure du support, et dans lequel le montage support (1) comprend sur l'un de ses faces une projection à collerette rabattue (5) adaptée pour recevoir et entourer partiellement le moyen de fixation annulaire (3) et dans lequel la collerette rabattue (5) s'étend dans la direction axiale au niveau de la couronne circonférentielle du montage support et dans la direction intérieure radiale, formant une ouverture annulaire adaptée pour le logement forcé vers l'extérieur dans le sens radial et dirigé dans le sens axial de la bague de fixation annulaire (3).

2. Ensemble de frein à disque selon la revendication 1, dans lequel le moyen de fixation annulaire comprend une bague annulaire ouverte (3) comportant un passage entre sa couronne annulaire intérieure et extérieure (9), moyennant quoi elle est adaptée pour être déformée par une force dirigée vers l'extérieur ou vers l'intérieur dans le sens radial.

3. Ensemble de frein à disque selon l'une quelconque des revendications 1 ou 2, dans lequel des projections planes (10) et des creux (11) font sensiblement saillie et sont sensiblement évidés et sont adaptés pour une association non forcée dans le sens radial.

4. Ensemble de frein à disque selon l'une quelconque des revendications 1 à 3, dans lequel il est prévu des moyens pour la fermeture de chaque creux sur chaque face plane de ceux-ci.

5. Ensemble de frein à disque selon l'une quelconque des revendications 1 à 4, dans lequel le moyen de fixation comprend une seule bague annulaire (3) adaptée pour être logée contre les creux (11) sur une face plane de ceux-ci.

6. Ensemble de frein à disque selon l'une quelconque des revendications 1 à 5, dans lequel la projection à collerette est constituée d'une pluralité de collerettes rabattues (5) disposées entre des creux conjugués (11), permettant ainsi de recevoir les projections conjuguées (10) d'un disque annulaire (2) entre chaque projection à collerette.

7. Ensemble de frein à disque selon l'une quelconque des revendications 1 à 6, dans lequel la face du montage support éloignée des collerettes rabattues est sensiblement continue ou pleine.

8. Ensemble de frein à disque selon l'une quelconque des revendications 1 à 7, dans lequel l'un ou les deux du disque et du montage comprennent un moyen de ventilation (6, 7) adapté pour refroidir le contact d'échange d'air avec l'air atmosphérique.

9. Ensemble de frein à disque selon la revendication 8, dans lequel le moyen de ventilation comprend une pluralité d'aubes (6) dirigées sensiblement radialement sur la face extérieure du support et/ou une pluralité d'orifices (7) usinés latéralement à intervalles réguliers à travers le disque, créant ainsi un rotor aéré.

10. Ensemble de frein à disque selon l'une quelconque des revendications 8 et 9, qui comprend une plaque d'appui (4) agencée en association avec la face extérieure du support, les aubes du support étant enfermées entre le support et la plaque d'appui.

11. Ensemble de frein à disque selon l'une quelconque des revendications 1 à 10, destiné à être utilisé dans le système de freinage d'un véhicule, en particulier pour la compétition et la course automobile ou motocycliste de haut niveau.

12. Procédé pour le montage d'un ensemble selon l'une quelconque des revendications 1 à 10, comprenant l'agencement d'un disque (2) tel que défini ci-dessus en association avec un support (3) tel que défini ci-dessus en amenant ceux-ci en association conjuguée et en introduisant un moyen de fixation fixant ainsi le disque pour qu'il soit maintenu de manière mobile avec le support et fermant les creux sur une face plane de ceux-ci ; le moyen de fixation butant contre une face plane de chaque projection conjuguée.

13. Procédé selon la revendication 12 qui comprend l'agencement en association des projections et des creux conjugués, moyennant quoi les projections butent contre le support sur sa face opposée, et la déformation d'une bague annulaire ouverte comportant une rupture comme défini ci-dessus, par compression radiale vers l'intérieur pour faire passer celle-ci en dessous des collerettes rabattues comme défini ci-dessus et par compression de relâchement permettant une dilatation élastique de celle-ci pour qu'elle soit logée contre la face frontale des creux.

14. Ensemble de frein à disque selon l'une quelconque des revendications 1 à 10, qui est un jeu de pièces comprenant un ou plus d'un disque et d'un support et d'une plaque d'appui optionnelle, et un moyen de fixation déformable de manière élastique tels que définis ci-dessus.
